# EUROPÄISCHE PATENTSCHRIFT

(11) **EP 3 619 523 B1**
(45) Veröffentlichungstag und Bekanntmachung des Hinweises auf die Patenterteilung: **13.12.2023**
(21) Anmeldenummer: 18752110.9
(22) Anmeldetag: 31.07.2018
(51) Int. Cl.: G01N 21/88, G01N 21/95

(54) **VERFAHREN UND VERWENDUNG EINER MANUELL TRAGBAREN PRÜFVORRICHTUNG ZUM PRÜFEN DER QUALITÄT VON ERGEBNISSEN DER MECHANISCHEN BEARBEITUNG EINES BOGENS**
METHOD AND USE OF A MANUALLY PORTABLE INSPECTION DEVICE FOR INSPECTING THE QUALITY OF RESULTS OF THE MECHANICAL PROCESSING OF A SHEET
PROCÉDÉ ET UTILISATION D'UN DISPOSITIF DE CONTRÔLE PORTABLE SERVANT À CONTRÔLER LA QUALITÉ DE RÉSULTATS DU TRAITEMENT MÉCANIQUE D'UNE FEUILLE

(30) Priorität: 07.08.2017 DE 102017007367; 31.08.2017 DE 102017120035
(43) Veröffentlichungstag der Anmeldung: 11.03.2020
(73) Patentinhaber: BW Papersystems Hamburg GmbH, 22880 Wedel (DE)
(72) Erfinder: GÄDTKE, Thorsten, 25436 Uetersen (DE)
(74) Vertreter: Schleitzer, Dirk-Karsten
(86) Internationale Anmeldenummer: PCT/EP2018/070723
(87) Internationale Veröffentlichungsnummer: WO 2019/030050

(56) Entgegenhaltungen:
- WO-A1-2005/033627
- WO-A1-2016/182223
- DE-A1-102015 113 469
- KR-A- 20160 134 185

## Beschreibung

Die vorliegende Erfindung betrifft ein Verfahren zum Prüfen der Qualität der mechanischen Bearbeitung eines Bogens in einer Schneid-, Stanz- oder Prägevorrichtung, vorzugsweise eines Papier-, Karton-, Papp-, Kunststoff-, Verbundmaterial- oder Textilbogens. Darüber hinaus betrifft die vorliegende Erfindung auch die Verwendung einer Prüfvorrichtung, um ein Verfahren zum Prüfen der Qualität der mechanischen Bearbeitung eines Bogens auszuführen..

Bögen, wie Papier-, Karton-, Papp-, Kunststoff-, Verbundmaterial- oder Textilbögen, aber auch Blätter oder Folien - nachfolgend allgemein als Bögen bezeichnet - können bei ihrer Herstellung aus großformatigen Rollen unterschiedliche Schneid-, Stanz- oder Prägeprozesse durchlaufen. Hierbei ist in der Regel eine zumindest stichprobenartige Überprüfung der Bearbeitungsqualität der Bögen erforderlich. Das Überprüfen beispielsweise der Schnittqualität kann insbesondere eine Überprüfung der Rauigkeit der Schnittkanten, der maximal auftretenden Differenz von Blattlängen und -breiten und/oder - bei gelochten Blättern oder Bogen - auch eine Lochanalyse mit einer Prüfung des Lochdurchmessers, der Lochposition und der Lochform umfassen. Diese Überprüfung kann zum einen der Überwachung der hergestellten Produkte auf Einhaltung verschiedener Normen, wie beispielsweise der europäischen Norm EN 12281, der internationalen Norm ISO 22414 oder dem Xerox US-Standard, und zum anderen aber auch der vorzugsweise Inline-Überwachung während eines Herstellungsprozesses dienen. Aufgrund der hohen Qualitätsanforderungen an die hergestellten Produkte besteht ein Bedarf an einem zuverlässigen Messverfahren zum Prüfen der Bearbeitungsqualität.

Aus der WO 2005/033627 A1 ist beispielsweis eine Prüfvorrichtung zum Prüfen der Schnittqualität von Papierblättern bekannt. Diese Prüfeinrichtung weist einen Scanner auf mit einem Bildsensor, der eingerichtet ist, einen bearbeiteten Abschnitt eines Papierbogens bildgebend zu erfassen und auf dieser Basis Bilddaten des Bearbeitungsabschnitts zu erzeugen. Ferner ist eine Auswertevorrichtung in Form eines Rechners vorgesehen, wobei der Rechner mit dem Scanner verbunden ist, um Ist-Bilddaten des Bearbeitungsabschnitts an den Rechner zu übertragen. Der Rechner ist derart eingerichtet, die auf Kontrastunterschiede zwischen dem Papierblatt und einer Scanabdeckung basierenden Ist-Bilddaten auszuwerten und als Auswertungsergebnis graphisch auf einem mit dem Rechner verbundenen Bildschirm darzustellen. Das graphisch dargestellte Auswertungsergebnis kann dann durch eine geschulte Person hinsichtlich der Schnittqualität visuell bewertet werden. Die Prüfeinrichtung kann benachbart zu einer Scanauflage des Scanners eine Blattaufnahme für einen Stapel von Papierblättern und einen Förderer zum Einziehen und Positionieren eines Papierblattes aufweisen, so dass das Prüfen, d.h. das Erzeugen eines graphisch dargestellten Auswertungsergebnisses je Papierblatt, weitgehend automatisiert durchgeführt werden kann.

Durch die stationäre Anordnung der bekannten Prüfvorrichtung ist die Überprüfung der Schnittqualität ortsgebunden. Ein Blatt oder Bogen muss aus dem Produktionsprozess ausgeschleust oder einem Bogenstapel entnommen werden. Anschließend muss das Blatt bzw. der Bogen zur Prüfvorrichtung transportiert und dieser zugeführt werden. Diese Schritte erfolgen manuell und führen zur einer Zeitverzögerung bei der Überprüfung der Schnittqualität, was dazu führen kann, dass bei einer fehlerhaften oder unzureichenden Schnittqualität erst vergleichsweise spät in einen Schneid- oder Stanzprozess eingegriffen werden kann.

Aus der DE 10 2015 200 397 A1 ist eine Prüfvorrichtung zum Prüfen der Qualität von Bearbeitungsergebnissen einer Bearbeitungseinrichtung für Substratbögen bekannt. Die Prüfvorrichtung, die einen Bildsensor aufweist, wird inline in einem Produktionsprozess verwendet oder kann alternativ auch als stationär angeordnete Prüfvorrichtung offline betrieben werden. Mithilfe eines Bildsensors werden Ist-Bilddaten erfasst, die mithilfe einer Auswertevorrichtung automatisch analysiert und mit hinterlegten Soll-Daten verglichen werden, um auf Basis eines daraus resultierenden Vergleichsergebnisses Korrekturdaten für Bearbeitungsparameter als Bestandteil des Auswertungsergebnisses zu ermitteln. Das Erfassen der Ist-Bilddaten ist lediglich an vorgegebenen Positionen einer Produktionsanlage möglich und ist festgelegt auf stets gleiche Bearbeitungsabschnitte des Bogens, dessen Qualität überprüft wird.

Die DE 10 2015 113 469 A1 offenbart eine Vorrichtung zum Prüfen einer Beschichtung eines Dokumentes mit einem Bildsensor. Mittels einer Beleuchtungseinrichtung wird strukturiertes Licht auf die zu prüfende Beschichtung des Dokumentes gerichtet. Das von dem Dokument reflektierte Licht wird von einem Bildsensor aufgenommen. Ein Prozessor vergleicht die Bildparameter der Bildaufnahme mit hinterlegten Referenzparametern, um die Beschichtung des Dokumentes zu prüfen.

Aufgabe der vorliegenden Erfindung ist es, ein Verfahren zum Prüfen der Qualität der mechanischen Bearbeitung eines Bogens in einer Schneid-, Stanz- oder Prägevorrichtung sowie eine diesbezügliche Verwendung einer Prüfvorrichtung der eingangs genannten Art zur Verfügung zu stellen, die in einfacher Weise und mit geringem Zeitaufwand eine bedarfsweise Überprüfung der Bearbeitungsqualität von Bögen zulassen. Insbesondere soll eine Prüfung der Bearbeitungsqualität nach dem Erreichen eines bestimmten Bearbeitungszustands gleichermaßen am Ort der Bearbeitungs- oder Produktionsanlage oder auch entfernt davon möglich sein. Zudem soll die Prüfung nicht zwingend auf einen bestimmten Bearbeitungsabschnitt des Bogens festgelegt sein. Schließlich sollen sich die Ergebnisse der Qualitätsprüfung in einfacher Weise unabhängig vom Ort der Durchführung der Prüfung unterschiedlichen Personen zugänglich machen lassen.

Diese Aufgabe wird durch ein Verfahren mit den Merkmalen des Anspruchs 1 sowie durch eine Verwendung mit den Merkmalen des Anspruchs 4 gelöst. Vorteilhafte Ausgestaltungen der Erfindung sind Gegenstand der Unteransprüche.

Erfindungsgemäß wird eine manuell tragbare Prüfvorrichtung für die Prüfung der Qualität der mechanischen Bearbeitung eines Bogens vorgesehen, bei der es sich beispielsweise um ein Smartphone, einen Personal Digital Assistant (PDA) oder einen Tablet-Computer handeln kann. Die Prüfvorrichtung weist eine Kameraeinrichtung mit wenigstens einem Bildsensor, eine Anzeigeeinrichtung und eine Auswertungseinrichtung auf, wobei die Prüfvorrichtung manuell relativ zu einem Bogen positioniert wird, wobei dann mit der Kameraeinrichtung wenigstens ein Bearbeitungsabschnitt des Bogens bildgebend erfasst wird und Bilddaten des Bearbeitungsabschnitts erzeugt werden. Mit der Auswertungseinrichtung wird anschließend aus den erzeugten Bilddaten automatisch wenigstens ein Qualitätsparameter eines Bearbeitungsergebnisses des Bogens ermittelt und, vorzugsweise, quantitativ und/oder qualitativ auf der Anzeigeeinrichtung angezeigt. Die Ermittlung des Qualitätsparameters kann einen Sollwertvergleich mit gespeicherten Sollwerten beinhalten.

Durch die automatische Auswertung und automatische Ermittlung des Qualitätsparameters wird eine auf digitalen Bilddaten basierende objektive Bewertung des Bearbeitungsergebnisses bereitgestellt, was eine stabile Qualitätssicherung für die Bearbeitung der Bögen gewährleistet. Durch eine automatisierte Auswertung in Anlehnung an eine für den betreffenden Qualitätsparameter einschlägige nationale und/oder internationale Norm wird eine objektive Analyse gewährleistet.

Insbesondere ermöglicht die vorliegende Erfindung die Überprüfung der Qualität von Schnittkanten eines Bogens nach der Bogenbearbeitung in einer Schneideinrichtung, wobei als Qualitätsparameter ein dem Fachmann an sich bekannter Standardwert für die Schnittqualität von Bogenkanten ermittelt wird, insbesondere gemäß EN 12281 oder gemäß ISO 22414 und/oder gemäß Xerox US-Standard. Dabei wird die Topographie einer Schnittkante des Bogens über eine bestimmte Kantenlänge aus den von dem Bearbeitungsabschnitt erzeugten Bilddaten bestimmt bzw. erfasst. Die Auswertungseinrichtung kann dazu eingerichtet sein, aus den erzeugten Bilddaten automatisch einen Standardwert für die Schnittqualität in Abhängigkeit von einem höchsten und einem tiefsten Punkt der Schnittkantentopographie zu bestimmen. Insbesondere kann die Auswertungseinrichtung dazu eingerichtet sein, automatisch den Abstand zwischen dem niedrigsten und höchsten Punkt der Topographie einer Schnittkante bzw. dem Abstand zwischen einer an den niedrigsten Punkt gelegten Unterlinie und einer an den höchsten Punkt gelegten Oberlinie der Schnittkante aus den erzeugten Bilddaten zu bestimmen und diesen Abstand nach Vergleich mit gespeicherten Standardabständen einem bestimmten passenden Standardabstand zuzuordnen. Der Standardabstand stellt einen Qualitätsparameter im Sinne der vorliegenden Erfindung für die Schnittqualität von Bogenkanten dar.

Nachdem die Größe des Qualitätsparameters ermittelt worden ist, kann der Wert des Qualitätsparameters quantitativ, d.h. als Zahlenwert, und/oder qualitativ, d.h. vorzugsweise als Bildinformation über die Qualität der Bearbeitung oder in Form von Symbolen oder auch in Textform, auf der Anzeigeeinrichtung angezeigt bzw. dargestellt werden. Der Qualitätsparameter kann mit hinterlegten Sollwerten verglichen werden und es kann lediglich bei Überschreitung und/oder Unterschreitung eines Sollwertes eine entsprechende Information angezeigt bzw. ausgegeben werden. Die Ausgabe eines akustischen Signals oder eines Vibrationssignals, insbesondere wenn ein ermittelter Qualitätsparameter der Höhe nach einen vorgegebenen Grenzwert überschreitet, ist möglich.

In Zusammenhang mit der Bestimmung der Schnittqualität von geschnittenen Bögen beispielsweise nach ISO 22414:2004(E) kann der Qualitätsparameter quantitativ angezeigt werden, d.h. als Wert für einen wie oben beschrieben bestimmten Standardabstand in [mm]. Alternativ oder ergänzend kann der Standardabstand auch qualitativ angezeigt werden, d.h. in Form von zwei voneinander beabstandeten Linien, zwischen die die untersuchte Schnittkante entsprechend der in der Norm festgelegten Vorgehensweise am besten passt. Auf diese Weise erhält der Nutzer die erforderlichen Informationen, um in einfacher Weise schnell darüber entscheiden zu können, ob die Schnittqualität bestimmten nationalen oder internationalen Normen genügt.

Durch die Verwendung einer manuell transportierbaren Prüfvorrichtung ist eine weitestgehend ortsunabhängige Prüfung der Bearbeitungsqualität von Bögen möglich, wobei die Prüfung vorzugsweise direkt am Ort der Bearbeitung des Bogens in einer Bearbeitungs- oder Produktionsanlage erfolgen kann oder auch an einem beliebigen anderen Ort, wenn der Bogen dort vorliegt. Damit ist eine hohe Entscheidungsfreiheit verbunden, ob und, bejahendenfalls, wo eine Prüfung der Bearbeitungsqualität erfolgen soll. Die Prüfung am Ort der Bearbeitung des Bogens lässt eine schnelle und einfache Bestimmung von Qualitätsparametern zu, die für das Ergebnis einer Bearbeitung des Bogens kennzeichnend sind. Im Übrigen lassen sich mit derselben Prüfvorrichtung bedarfsweise auch unterschiedliche Bereiche bzw. Bearbeitungsabschnitte des Bogens nacheinander und/oder ergänzend auf das Vorliegen bestimmter Qualitätsmerkmale hin prüfen. So kann beispielsweise eine Schnittkantenanalyse lediglich die Überprüfung lediglich eines bestimmten Abschnitts der Schnittkante vorsehen, sofern die Bearbeitungsqualität dieses Schnittkantenabschnitts die gestellten Qualitätsanforderungen erfüllt. Ist dies nicht der Fall, können bedarfsweise weitere Schnittkantenabschnitte des Bogens überprüft werden. Damit lässt die Erfindung ein großes Maß an Entscheidungsfreiheit des Nutzers über den Zeitpunkt und den Ort der Prüfung sowie den Bearbeitungsabschnitt zu, der überprüft wird. Das erfindungsgemäße Verfahren und die Prüfvorrichtung sind somit insbesondere als ergänzende Maßnahmen zur Qualitätssicherung neben den aus dem Stand der Technik bekannten Prüfverfahren mit stationär angeordneten Prüfvorrichtungen geeignet. Zudem lässt es die Anzeige des Qualitätsparameters auf der Prüfvorrichtung zu, das Ergebnis der Qualitätsprüfung anderen Personen gegebenenfalls durch einfache händische Übergabe der Prüfvorrichtung mitzuteilen.

Vorzugsweise kann als Prüfvorrichtung ein Smartphone, wie beispielsweise ein iPhone, ein PDA oder ein Tablet-Computer eingesetzt werden, so dass auf eine kostengünstig verfügbare Hardware zurückgegriffen wird, die die erforderliche Peripherie für eine programmtechnische Einrichtung zur Ausführung des erfindungsgemäßen Verfahrens bietet. Eine solche Prüfvorrichtung zeichnet sich durch eine leichte und intuitive Handhabbarkeit und durch ein geringes Gewicht sowie eine hohe Verfügbarkeit aus. Die hohe Qualität der Kameraeinrichtungen gängiger für den Privatbereich entwickelter Mobilgeräte, wie Smartphones oder Tablet-Computern, ist hierbei von Vorteil für die Genauigkeit der Qualitätsprüfung.

Die Erfindung sieht die Verwendung eines entsprechenden Computerprogramms vor, das auf der Prüfvorrichtung installiert ist und Befehle umfasst, die Auswertung der Bilddaten zur Ermittlung des Qualitätsparameters automatisch auszuführen. In diesem Zusammenhang sieht eine vorteilhafte und kostengünstige Lösung der oben gestellten Aufgabe die Installation einer Anwendungssoftware (application software) für Mobilgeräte vor, die insbesondere die automatische Auswertung der erzeugten Bilddaten eines Bearbeitungsabschnitts ausführt und wenigstens einen Qualitätsparameter der Bearbeitung ermittelt. Durch eine App-basierte Steuerung können privat oder dienstlich genutzte Mobilgeräte direkt zur Prüfung der Bearbeitungsqualität von Bögen genutzt werden. Die Anwendungssoftware kann die Ermittlung von unterschiedlichen Qualitätsparametern vorsehen, so dass die gleiche Prüfvorrichtung gleichermaßen für die Überprüfung von unterschiedlichen Bearbeitungsergebnissen bzw. nach dem Erreichen von unterschiedlichen Bearbeitungsstufen des Bogens eingesetzt werden kann. Auch kann eine geeignete Anwendungssoftware die Prüfung von Bearbeitungsergebnissen von unterschiedlich bearbeiteten und/oder hergestellten Bögen und/oder von Bögen aus unterschiedlichen Bearbeitungs- und/oder Produktionsanlagen ermöglichen.

Die Anwendungssoftware kann von einem Unternehmen, das Bearbeitungs- oder Produktionsanlagen herstellt, Käufern der Anlagen bereitgestellt werden, um in einfacher Weise eine gleiche Qualität bei der Überprüfung der Bearbeitungsergebnisse solcher Anlagen zu gewährleisten. Eine automatische und/oder regelmäßige Aktualisierung der Anwendungssoftware kann vorgesehen sein, um allen Nutzern einen gleichen Entwicklungsstand der Software zur Verfügung zu stellen. Zudem ist eine einfache und kostengünstige Zugänglichkeit der Anwendungssoftware durch Download aus einem gängigen App-Portal möglich.

Zur Ermittlung des Qualitätsparameters kann mit der Kameraeinrichtung eine Fotographie des zu überprüfenden Bearbeitungsabschnitts erzeugt und gespeichert werden. Die Auswertungseinrichtung kann dann eingerichtet sein, den Qualitätsparameter aus der gespeicherten Fotographie zu ermitteln. Grundsätzlich ist aber auch eine Auswertung auf der Grundlage eines Live-Bildes möglich.

Der Qualitätsparameter kann zusammen mit den erzeugten Bilddaten in einer gemeinsamen Bilddarstellung auf der Anzeigeeinrichtung angezeigt werden. Besonders bevorzugt ist die Ergänzung aufgenommener Bilder eines Bearbeitungsabschnitts oder auch von Videos mit computergenerierten Zusatzinformationen oder virtuellen Objekten mittels Einblendung/Überlagerung vorgesehen. In diesem Zusammenhang kann beispielsweise bei der Bestimmung der Schnittqualität von geschnittenen Bögen vorgesehen sein, dass eine (gespeicherte) Bilddarstellung bzw. eine Fotographie der Schnittkante eines Bogens gemeinsam mit einem, wie oben beispielsweise nach ISO 22414:2004(E) bestimmten, Standardabstand auf der Anzeigeeinrichtung angezeigt wird. Besonders bevorzugt ist in diesem Zusammenhang, dass zwei voneinander beabstandete Linien, die einem bestimmten Standardabstand entsprechen, automatisch der Schnittkante überlagert und graphisch angezeigt werden, so dass die Schnittkante entsprechend der Vorgehensweise nach ISO 22414:2004(E) zwischen die beiden Linien passt. Diese Form der gemeinsamen graphischen Darstellung von Qualitätsparameter und fotographischer Wiedergabe des Bearbeitungsabschnitts erleichtert wesentlich die Beurteilung des Bearbeitungsergebnisses.

In einer vorteilhaften Ausführungsform des Verfahrens erzeugt die Kameraeinrichtung mittels eines Objektivs Bilddaten des Bearbeitungsabschnitts bei einer wenigstens 4-fachen, vorteilhaft bei einer wenigstens 12-fachen, bevorzugt bei einer 42-fachen Vergrößerung des Bearbeitungsabschnitts. Die Prüfvorrichtung kann mit zusätzlichen Einrichtungen ausgestattet sein, wie beispielsweise mit einem Mikroskop, das als separate Einheit mit der Prüfvorrichtung verbunden ist. Beispielsweise kann ein mit einem Smartphone verbindbares separates Mikroskop vorgesehen sein. Auch andere mit einem Smartphone verbindbare Einrichtungen, insbesondere zur Verbesserung der Bildauswertung, sind einsetzbar. Die Bilddaten können zusätzlich oder alternativ von der Auswertungseinrichtung digital vergrößert werden, beispielsweise wenigstens 2-fach, vorteilhaft wenigstens 4-fach. Die Vergrößerung des Bearbeitungsabschnitts ist hilfreich, da sich die Topographie des Bearbeitungsabschnitts gemäß den gängigen Normen in einem Intervallbereich kleiner als 0,17 mm befinden soll. Die Vergrößerung vereinfacht einerseits die Auswertung und Ermittlung des Qualitätsparameters. Andererseits wird durch die vergrößerte Darstellung der Topographie des Bearbeitungsabschnitts der Verlauf der Topographie für das menschliche Auge leicht erkennbar und kann deshalb auch visuell beurteilt werden. Durch eine beispielsweise 42-fache Vergrößerung werden Topographien, die eine Größe von 0,17 mm aufweisen, derart vergrößert, dass die Topographie in der Bilddarstellung eine Größe von 7 mm aufweist. Größenordnungen im Millimeterbereich können vom Menschen visuell mit bloßem Auge beurteilt und unterschieden werden. Die Bildvergrößerung erfolgt vorzugsweise mit einer optischen Einrichtung wie beispielsweise einem Objektiv. Die Verwendung eines separaten Objektivs, das mit der Kameraeinrichtung für die Prüfung verbunden wird, ermöglicht den Einsatz von gängigen Mobilgeräten, wie Smartphones oder Tablet-Computern als Prüfvorrichtung, deren Kameraeinrichtung nicht die nötige Vergrö-ßerung zulässt. Alternativ oder zusätzlich kann das Bild auch digital vergrößert werden. Im erst genannten Fall spricht man von einem optischen Zoom, im zweiten Fall von einem digitalen Zoom.

Eine gegebenenfalls notwendige Kalibrierung der Prüfvorrichtung kann manuell und/oder automatisch erfolgen.

Mit Hilfe der Kameraeinrichtung können Einzelbilder, Bildfolgen, Panoramabilder und/oder Filmsequenzen (Videos) erzeugt bzw. aufgenommen werden. So ist es einerseits möglich, Standbilder des Bearbeitungsabschnitts, insbesondere der Schnittkannte, aufzunehmen, andererseits können mittels einer Filmfunktion auch bewegte Bilder erzeugt werden. Darüber hinaus ist es auch möglich, ein aus mehreren Standbildern zusammengesetztes Bild, eine sogenannte Panoramaaufnahme, zu erzeugen. Auch andere Aufnahmen, wie beispielsweise Aufnahmen, die mittels eines Fotofilters erzeugt worden, sind von Vorteil.

Die Prüfvorrichtung kann durch eine entsprechende hardware- und/oder softwaretechnische Ausgestaltung in der Lage sein, die Auswertung der Bilddaten basierend auf Einzelbildern, Bildfolgen, Panoramabildern und/oder Videosequenzen durchzuführen. Insbesondere die Erzeugung von Video- bzw. Filmsequenzen bietet die Voraussetzung für eine Prüfung der Qualität einer mechanischen Bearbeitung eines Bogens über eine längere Erstreckung eines Bearbeitungsabschnitts.

Vorteilhafterweise wird der Bearbeitungsabschnitt während der Erzeugung der Bilddaten mit einer Lichtquelle beleuchtet. Durch die Lichtquelle werden Kontrastunterschiede zwischen dem Bogen und der Unterlage verstärkt. Die Qualität der Aufnahme kann durch den Einsatz einer Lichtquelle gesteigert werden. Der Bearbeitungsabschnitt kann dauerhaft von der Lichtquelle beleuchtet werden oder nur kurzzeitig durch eine gepulste Lichtquelle angestrahlt werden. Die Prüfvorrichtung kann zu diesem Zweck wenigstens eine separate und mit der Prüfvorrichtung bedarfsweise verbindbare Beleuchtungseinrichtung aufweisen. Alternativ und/oder ergänzend kann auch eine schwarze Platte als Unterlage verwendet werden, wenn der Bearbeitungsabschnitt mit der Kameraeinrichtung aufgenommen wird. Eine entsprechende Kontrastplatte ist dazu vorgesehen, einen ausreichenden Kontrast bei der bildgebenden Erfassung des Bearbeitungsabschnitts zu erzeugen. Bei Einsatz einer schwarzen Platte kann gegebenenfalls auch die Notwendigkeit entfallen, den Bearbeitungsabschnitt mit einer Lichtquelle zusätzlich zu beleuchten.

Für die Prüfung der Bearbeitungsqualität ist es zweckmäßig, wenn die Prüfvorrichtung und der Bogen relativ zueinander in einer bestimmten, d.h. definierten, Position angeordnet werden. Vorrichtungsgemäß können entsprechende Mittel vorgesehen sein, um die Kameraeinrichtung relativ zu einem Bogen mit einem bestimmten Abstand und/oder mit einer bestimmten Winkelstellung zum Bogen anzuordnen. Dabei werden die Prüfvorrichtung und der Bogen in einer bestimmten Anordnung zueinander lagefixiert. Ist der Abstand der Kameraeinrichtung vom Bogen und die Winkelstellung zum Bogen bekannt, führt dies zu einer Vereinfachung bei der automatischen Auswertung der von dem Bearbeitungsabschnitt erzeugten Bilddaten. Insbesondere sind damit die Größenverhältnisse des Bearbeitungsabschnitts bekannt bzw. berechenbar und es lässt sich in einfacher Weise ein Wert des Qualitätsparameters aus den Bilddaten ermitteln.

Zur Anordnung der Prüfvorrichtung relativ zu einem Bogen in einer bestimmten definierten Position kann eine separate Halteeinrichtung vorgesehen sein. Mit der Halteeinrichtung lässt sich die Prüfvorrichtung mit einem bestimmten Abstand und in einem bestimmten Winkel zum Bogen anordnen. Der Bogen kann dabei auf einer Unterlage aufliegen und gegen einen Anschlag angelegt werden, dessen Position relativ zur Halteeinrichtung bekannt ist. Damit ist auch die Position des Bogens relativ zur Halteeinrichtung bekannt. Der Bogen kann beispielsweise auf einem Tisch aufliegen und an Anschlägen ausgerichtet werden. Die Halteeinrichtung, an der die Prüfvorrichtung gehalten ist, wird anschließend derart über dem Bogen auf dem Tisch positioniert, dass der zu überprüfende Bearbeitungsabschnitt, beispielsweise eine Schnittkante des Bogens, mit der Kameraeinrichtung bildgebend erfasst werden kann. Zum Halten der Prüfvorrichtung weist die Halteeinrichtung entsprechende Haltemittel auf, beispielsweise Klemmmittel oder Schraubmittel, mit denen die Prüfvorrichtung lösbar mit der Halteeinrichtung verbindbar ist. Weist die Prüfvorrichtung ein vorzugsweise separates und mit der Prüfvorrichtung bedarfsweise verbindbares Teleobjektiv auf, kann die Prüfvorrichtung auch direkt über das Teleobjektiv in einer bestimmten Position zum Bearbeitungsabschnitt gehalten werden. Bei der Halteeinrichtung kann es sich auch um ein Stativ handeln, mit dem sich ein Smartphone stabil auf einem Untergrund aufstellen lässt.

Die Prüfvorrichtung kann eine Wasserwaagen-Funktion aufweisen, damit die Prüfvorrichtung auf einfache Weise parallel zum Bearbeitungsabschnitt positioniert werden kann. Die Wasserwaagen-Funktion lässt sich durch geeignete Sensoren realisieren, die in die Prüfvorrichtung vorzugsweise integriert sind.

Alternativ ist es auch möglich, dass wenigstens ein zwei- oder dreidimensionales Referenzobjekt zusammen mit dem Bearbeitungsabschnitt des Bogens mit der Kameraeinrichtung bildgebend erfasst und aus den Bilddaten des Referenzobjekts die tatsächlichen geometrischen Größen des Bearbeitungsabschnitts ermittelt werden. Durch den Einsatz eines Referenzobjekts ist es nicht mehr nötig, die Prüfvorrichtung in einer definierten relativen Lage zum Bogen zu positionieren. Die Überprüfung beispielsweise der Schnittqualität eines Bogens kann damit in einer Vielzahl von Positionen der Prüfvorrichtung relativ zum Bogen erfolgen. Die Prüfvorrichtung kann grundsätzlich sogar frei zum Bogen positioniert werden. In einem einfachen Fall kann ein Benutzer die Prüfvorrichtung in der Hand beabstandet vom Bogen halten und die Prüfung durchführen. Der Bogen muss dabei auch nicht gegen Anschläge ausgerichtet sein.

Als zweidimensionales Referenzobjekt kann beispielsweise eine blattförmige Unterlage dienen, die Objekte mit bekannten Abmessungen, wie beispielsweise Karomuster mit Karos in definierter Größe und mit definierten Winkeln zwischen den Karoseiten, aufweist. Die Karomuster können beispielsweise aufgedruckt sein. Der zu untersuchende Bearbeitungsabschnitt des Bogens wird so auf der blattförmigen Unterlage platziert, dass die Unterlage mit dem Karomuster seitlich über den Bearbeitungsabschnitt übersteht. Bei der Bildaufnahme wird neben dem Bearbeitungsabschnitt dann auch ein Teil der Referenzunterlage erfasst. Anhand der Größe der Karos sowie anhand des Verzugs der Karos auf der erzeugten Bilddarstellung lassen sich die tatsächliche Größe des Bearbeitungsabschnitts und damit auch die Größe des Qualitätsparameters ermitteln. In Zusammenhang mit der Überprüfung der Qualität von Schnittkanten eines Bogens können so die geometrischen Größen der Topographie der Schnittkante sowie die Lage der Schnittkante relativ zum Bildsensor der Kameraeinrichtung berechnet und bestimmt werden.

Auch ein dreidimensionaler Körper mit bekannten Abmessungen kann als Referenzobjekt dienen. Dieser wird vorzugsweise neben dem Bearbeitungsabschnitt des Bogens positioniert und zusammen mit dem Bearbeitungsabschnitt bildtechnisch erfasst. Das dreidimensionale Referenzobjekt kann aber auch auf dem Bogen angeordnet werden. Anhand der Größe und Ausrichtung der Kanten und/oder Seiten des dreidimensionalen Referenzobjekts können die geometrischen Größen in der Bilddarstellung bestimmt und berechnet werden. Darüber hinaus kann auch die Lage der Kameraeinrichtung bzw. des Bildsensors und damit der Prüfvorrichtung relativ zum Bogen bestimmt und berechnet werden.

Die Prüfvorrichtung kann auch eine Sensoreinrichtung mit wenigstens einem Sensor aufweisen, um die relative Position des Bildsensors der Kameraeinrichtung zum Bogen exakt zu bestimmen. Die Sensoreinrichtung kann insbesondere wenigstens einen Abstandssensor und/oder einen Neigungssensor aufweisen. Geeignete Sensorsysteme sind dem Fachmann bekannt. Zur Abstandsmessung können beispielsweise optische Systeme, insbesondere Lasermesssysteme, zum Einsatz kommen. Für die Neigungsmessung können beispielsweise Winkelsensoren eingesetzt werden, die Winkelpositionen rotatorischer Elemente absolut mittels eines magnetischen Messprinzips erfassen. Mithilfe der Sensoreinrichtung kann die Prüfung der Qualität des Bearbeitungsabschnitts aus einer beliebigen relativen Lage der Prüfvorrichtung zum Bogen erfolgen. Weder ist es notwendig, die Prüfvorrichtung in eine vorgegebene definierte Lage zum Bogen zu positionieren, noch ist der Einsatz eines Referenzobjekts notwendig. Die Prüfung kann auf einfache Art eingeleitet werden, indem die Prüfvorrichtung manuell in beliebiger Lage zum Bogen gehalten wird. Auch ein Ausrichten des Bogens an Anschlägen ist dann nicht notwendig.

Die Prüfvorrichtung kann im Übrigen eine Sende- und/oder Empfangseinrichtung für eine Datenübertragung aufweisen, so dass es möglich ist, den ermittelten Qualitätsparameter quantitativ und/oder qualitativ an wenigstens eine von der Prüfvorrichtung entfernte mobile oder stationäre Empfangseinheit zu übertragen, vorzugsweise über ein Mobilfunknetz. Auch andere kabellose Übertragungsarten, wie beispielsweise mittels WLAN, Bluethooth oder Infrarotschnittstelle, sind möglich. Ebenfalls sind auch kabelgebundene Übertragungswege, wie beispielsweise über LAN- oder Telefonleitungen, nicht ausgeschlossen. Der Qualitätsparameter kann vorzugsweise zusammen mit einer Bilddarstellung des überprüften Bearbeitungsabschnitts an die Empfangseinheit übertragen werden. Weiter vorzugsweise werden auf der Empfangseinheit dieselben Informationen angezeigt, wie auf der Anzeigeeinrichtung der erfindungsgemäßen Prüfvorrichtung.

Durch das Versenden des Qualitätsparameters und/oder der Bilddarstellung an wenigstens eine Empfangseinheit können die versendeten Daten anderen Personen zur Verfügung gestellt werden, die sich nicht in unmittelbarer Nähe zum Ort der Prüfung aufhalten. Insbesondere wird es hierdurch möglich, auf schnelle und einfache Weise verantwortliche Personengruppen, wie beispielsweise Qualitäts- und/oder Schichtleiter, über die Ergebnisse der Qualitätsprüfung zu informieren. Qualitätsparameter und/oder Bilddarstellungen können an mobile Empfangseinheiten, wie beispielsweise Smartphones oder Tablet-Computer, oder an stationäre Empfangseinrichtungen, wie beispielsweise Desktopcomputer, gesendet und gegebenenfalls von diesen auch abgerufen werden. Ein einfaches Hinterlegen bzw. Abspeichern der Daten in einer zentralen Datenbank und/oder auf einem Server ist ebenfalls möglich und von Vorteil. Die gespeicherten Daten können auf diese Weise zu einem späteren Zeitpunkt zur Qualitätsbeurteilung verwendet werden.

Die zuvor beschriebenen Ausführungsformen der Erfindung können bedarfsweise miteinander kombiniert werden, auch wenn dies nicht im Einzelnen ausdrücklich erwähnt ist. Der Offenbarungsgehalt der Erfindung ist nicht auf die durch die gewählte Absatzformatierung vorgegebenen Kombinationen von Erfindungsmerkmalen beschränkt.

Weitere Merkmale der vorliegenden Erfindung ergeben sich aus der nachfolgenden Beschreibung eines bevorzugten Ausführungsbeispiels der Erfindung anhand der Zeichnungen und aus den Zeichnungen selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehungen.

Die Erfindung wird im Folgenden anhand der Figuren näher erläutert; es zeigen
- Fig. 1: eine schematische Darstellung einer Prüfvorrichtung zum Prüfen der Qualität von Ergebnissen der mechanischen Bearbeitung eines Bogens in einer Bearbeitungseinrichtung und
- Fig. 2: eine schematische Ansicht einer erfindungsgemäßen Darstellung eines Qualitätsparameters auf einer Anzeigeeinrichtung der Prüfvorrichtung aus Fig. 1.

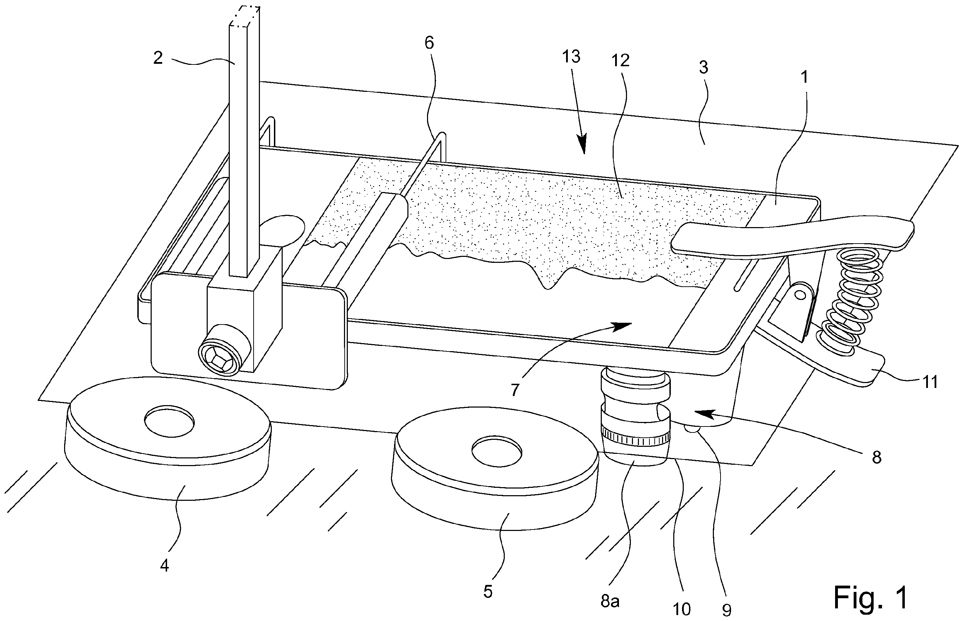

Fig. 1 zeigt eine Prüfvorrichtung 1 zur Überprüfung der Qualität von Schnittkanten eines Bogens 3 nach der Bogenbearbeitung in einer Schneideinrichtung. Die Prüfvorrichtung 1 wird über eine Halteeinrichtung 2 gehalten und beabstandet von einem Bogen 3 über dem Bogen 3 positioniert. Der Bogen 3 ist dabei an zwei Anschlägen 4, 5 ausgerichtet bzw. positioniert. In Fig. 1 wird der Bogen 3 über eine Längskante an den Anschlägen 4, 5 positioniert. Die Anschläge 4, 5 können auch anders angeordnet sein, beispielsweise derart, dass der Anschlag 4 eine Querseite des Bogens und Anschlag 5 eine Längsseite des Bogens 3 positioniert.

Die Prüfvorrichtung 1 wird mittels einer Klemmvorrichtung 6 an der Halteeinrichtung 2 befestigt. Die Haltevorrichtung 2 ist in Fig. 1 nicht vollständig dargestellt. So kann die Haltevorrichtung 2 derart ausgebildet sein, dass die Prüfvorrichtung 1 parallel zum Bogen 3 positioniert werden kann, wobei die Haltevorrichtung 2 als Träger für die Prüfvorrichtung 1 dient.

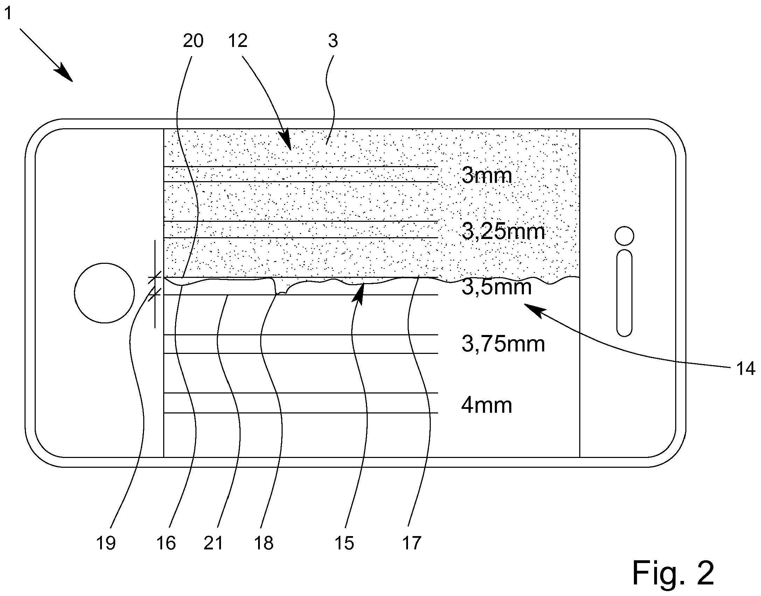

Die Prüfvorrichtung 1 weist auf der zum Bogen 3 gerichteten Seite eine nicht im einzelnen dargestellte Kameraeinrichtung 7 auf, der ein Objektiv 8 vorgesetzt ist. Des Weiteren weist die Prüfvorrichtung 1 eine Lichtquelle 9 auf, um eine Schnittkante 16 des Bogens 3 (vgl. Fig. 2) als zu prüfenden Bearbeitungsabschnitt 10 zu beleuchten. Das Objektiv 8 kann dabei einen transparenten Distanzring 8a aufweisen, der auf dem Bearbeitungsabschnitt 10 des Bogens 3 aufliegt, die Prüfvorrichtung 1 auf dem Bogen abstützt und so unterstützend zur Halteeinrichtung 2 wirkt. Die Transparenz des Distanzrings stellt sicher, dass der von der Kameraeinrichtung 7 erfasste Bearbeitungsabschnitt 10 von der Lichtquelle 9 ausreichend beleuchtet wird. Das Objektiv 8 und die Lichtquelle 9 werden über eine Klemmvorrichtung 11 an der Prüfvorrichtung 1 befestigt.

Bei der Prüfvorrichtung 1 handelt es sich um ein Smartphone, dass eine Anzeigeeinrichtung 12 und eine nicht dargestellte Auswertungseinrichtung 13 aufweist. Zur Prüfung der Qualität des Bearbeitungsabschnitts 10 wird ein zu überprüfender Bogen 3 an den Anschlägen 4, 5 ausgerichtet. Die Prüfvorrichtung 1 kann über die Klemmvorrichtung 6 an der Halteeinrichtung 2 befestigt werden, wodurch die Prüfvorrichtung 1 in einer bestimmten relativen Position zum Bogen 3 gehalten wird. Die Kameraeinrichtung 7 der Prüfvorrichtung 1 ist derart ausgerichtet, dass der zu überprüfende Bearbeitungsabschnitt 10 zumindest teilweise bildgebend erfasst werden kann. Mithilfe des Objektivs 8 kann der Bearbeitungsabschnitt 10 vergrö-ßert von der Kameraeinrichtung 7 erfasst und auf der Anzeigeeinrichtung 12 dargestellt werden. Mithilfe der Auswertungseinrichtung 13 wird dann automatisch aus den erfassten Bilddaten wenigstens ein Qualitätsparameter 14 bestimmt, wobei als Qualitätsparameter 14 ein dem Fachmann an sich bekannter Standardwert für die Schnittqualität von Bogenkanten ermittelt wird, insbesondere gemäß EN 12281 oder gemäß ISO 22414 und/oder gemäß Xerox US-Standard. Zu diesem Zweck ist auf einer nicht gezeigten Speichereinrichtung der Prüfvorrichtung 1 eine Anwendungssoftware gespeichert, welche bei der Ausführung auf der Prüfvorrichtung diese veranlasst, aus erzeugten Bilddaten des Bearbeitungsabschnitts wenigstens einen Qualitätsparameter des Bearbeitungsergebnisses quantitativ zu ermitteln. Die Anwendungssoftware kann manuell gestartet werden, nachdem von einem Nutzer mit der Prüfvorrichtung 1 manuell eine Fotographie des zu überprüfenden Bearbeitungsabschnitts 10 des Bogens 3 erstellt worden ist.

Fig. 2 zeigt schematisch das Ergebnis der automatischen Überprüfung der Qualität einer Schnittkante 16 des Bogens 3 mit der Prüfvorrichtung 1, wobei die Bestimmung des Qualitätsparameters 14 normgemäß erfolgt, insbesondere entsprechend den oben genannten Normen.

Von der Anzeigeeinrichtung 12 wird eine Bilddarstellung der Topographie 15 der Schnittkante 16 des Bogens 3 in 42-facher Vergrößerung angezeigt. Die Schnittkante 16 weist dabei einen niedrigsten Punkt 17 und einen höchsten Punkt 18 auf. Die Auswertungseinrichtung 13 kann den Qualitätsparameter 14 bestimmen, indem automatisch, d.h. softwaregsteuert, eine vertikale Unterlinie an den niedrigsten Punkt 17 der Schnittkante 16 und eine vertikale, zur Unterlinie parallele Oberlinie durch den höchsten Punkt 18 der Schnittkante 16 gelegt wird. Anschließend wird automatisch der vertikale Abstand zwischen der Oberlinie und der Unterlinie bestimmt. Dieser vertikale Abstand wird dann einem bestimmten Standardabstand 19 zugeordnet, wobei die Zuordnung je nach angewendeter Norm unterschiedlich erfolgen kann.

In Anlehnung an die oben genannten Normen kann die Auswertung der Schnittkante 16 derart erfolgen, dass die Topographie 15 des Bearbeitungsabschnitts 10 eines Bogens 3 mit festgesetzten Standardabständen verglichen wird, wobei jeder Standardabstand durch zwei parallel beabstandete Linien begrenzt wird und wobei jeder Standardabstand eine unterschiedliche Beabstandung der beiden Linien aufweist (vgl. Fig. 2). Der Standardabstand 19, der die Topographie 15 der Schnittkante 16 bestmöglich und/oder vollständig einschließt, wird durch zwei Linien 20, 21 begrenzt und stellt den zu ermittelnden Qualitätsparameter 14 dar. In dem in Fig. 2 dargestellten Fall beträgt der Standardabstand 19 beispielsweise ca. 3,5 mm. Andere Intervallgrößen des Qualitätsparameters 14 bzw. andere Standardabstände sind ebenfalls in Fig. 2 beispielhaft dargestellt und können ein einem Bereich zwischen 1 und 7 mm liegen. In Fig. 2 sind beispielhaft Intervalle des Standardabstands zwischen 3 und 4 mm dargestellt.

Gemäß Fig. 2 wird die Bilddarstellung der Topographie 15 der Schnittkannte 16 zusammen mit dem der Schnittkante 16 zugeordneten Standardabstand 19 angezeigt, wobei der Standardabstand 19 qualitativ in Form von zwei parallelen Linien 20, 21, die der Schnittkante 16 überlagert sind, und quantitativ als Zahlenwert angezeigt wird. Die weiteren Standardabstände müssen nicht zwingend angezeigt werden. Allein anhand des Topographieverlaufs 15, der vergrößert dargestellt ist, kann die Qualität des Bearbeitungsabschnitts 10 subjektiv auf visuelle Weise bewertet werden. Durch die Darstellung und Angabe des Qualitätsparameters 14 kann gleichzeitig eine objektive Beurteilung der Qualität des Bearbeitungsabschnitts 10 erfolgen.

Es ist leicht erkennbar, dass die in Fig. 2 dargestellte Prüfvorrichtung 1 auf einfache Weise bewegt und transportiert werden kann. So ist es möglich, die erzielten Ergebnisse der Überprüfung der Schnittkante 16 anderen Personen zugänglich zu machen, indem die Prüfvorrichtung 1 händisch an andere Personen übergeben wird. Darüber hinaus können in vorteilhafter Weise die Bilddarstellung und/oder der Qualitätsparameter mit Hilfe einer nicht dargestellten Sendeeinrichtung an eine separate transportable (mobile) oder stationäre Empfangseinheit gesendet werden. Bei der Empfangseinheit kann es sich um ein anderes Smartphone, einen PDA und/oder einen Tablet-Computer handeln. Die Bilddarstellungen und/oder Qualitätsparameter können alternativ oder zusätzlich auch an stationäre Empfangseinheiten, wie beispielsweise Server, Leitrechner und/oder Desktop-Computer, übertragen werden. Die Übertragung der Daten kann dabei vorzugsweise drahtlos erfolgen, beispielsweise über das Mobilfunknetz. Auch andere kabellose Übertragungsarten und auch kabelgebundene Übertragungen sind möglich.

Die in Fig. 2 gezeigte Darstellung einer Aufnahme eines Bearbeitungsabschnitts 10 sowie die Darstellung des Qualitätsparameters 14 sind nur beispielhaft zu verstehen. So kann insbesondere der Qualitätsparameter 14 nicht nur durch Symbole, wie beispielsweise Linien, und Zahlenwerte angegeben werden, sondern auch in Textform beschrieben werden. Dabei kann die Darstellung auf einer qualitativen und/oder quantitativen Anzeige basieren. So ist beispielsweise auch ein einfaches Ampelsystem denkbar, bei dem die Farbe Grün einen zulässigen Wert des Qualitätsparameters 14 kennzeichnet und die Farbe Rot einen Wert des Qualitätsparameters 14, der einen vorgegebenen Sollwert unzulässig überschreitet.

### Bezugszeichenliste:

- 1: Prüfvorrichtung
- 2: Halteeinrichtung
- 3: Bogen
- 4: Anschlag
- 5: Anschlag
- 6: Klemmvorrichtung
- 7: Kameraeinrichtung
- 8: Objektiv
- 8a: Tragring
- 9: Lichtquelle
- 10: Bearbeitungsabschnitt
- 11: Klemmvorrichtung
- 12: Anzeigeeinrichtung
- 13: Auswertungseinrichtung
- 14: Qualitätsparameter
- 15: Topographie
- 16: Schnittkante
- 17: niedrigster Punkt
- 18: höchster Punkt
- 19: Standardabstand
- 20: Linie
- 21: Linie

## Patentansprüche

1. Verfahren zum Prüfen der Qualität von Schnittkanten nach der mechanischen Bearbeitung eines Bogens (3) in einer Schneidvorrichtung, vorzugsweise eines Papier-, Karton-, Papp-, Kunststoff- oder Textilbogens, mit einer manuell tragbaren Prüfvorrichtung (1), vorzugsweise einem Smartphone, einem Personal Digital Assistant (PDA) oder einem Tablet-Computer, wobei die Prüfvorrichtung (1) eine Kameraeinrichtung (7) mit wenigstens einem Bildsensor, eine Anzeigeeinrichtung (12) und eine Auswertungseinrichtung (13) aufweist, wobei die Prüfvorrichtung (1) manuell relativ zu einem Bogen positioniert wird, wobei mit der Kameraeinrichtung (7) wenigstens ein Bearbeitungsabschnitt (10) des Bogens (3) bildgebend erfasst wird und Bilddaten des Bearbeitungsabschnitts (10) erzeugt werden und wobei mit der Auswertungseinrichtung (13) aus den erzeugten Bilddaten wenigstens ein Qualitätsparameter (14) eines Bearbeitungsergebnisses des Bogens (3) ermittelt und, vorzugsweise, auf der Anzeigeeinrichtung (12) angezeigt wird, wobei die Topographie einer Schnittkante des Bogens (3) über eine bestimmte Kantenlänge aus den von dem Bearbeitungsabschnitt (10) erzeugten Bilddaten bestimmt wird.

2. Verfahren nach Anspruch 1, **dadurch gekennzeichnet, dass** der Qualitätsparameter (14) zusammen mit den Bilddaten des Bearbeitungsabschnitts (10) automatisch in einer gemeinsamen Bilddarstellung auf der Anzeigeeinrichtung (12) angezeigt wird.

3. Verfahren nach einem der vorhergehenden Ansprüche, **dadurch gekennzeichnet, dass** die Bilddaten des Bearbeitungsabschnitts (10) automatisch bei einer wenigstens 4-fachen, vorteilhaft bei einer wenigstens 12-fachen, bevorzugt bei einer 42-fachen Vergrößerung des Bearbeitungsabschnitts (10) erzeugt werden und/oder dass die Bilddaten von der Auswertungseinrichtung (13) automatisch wenigstens 4-fach, vorteilhaft wenigstens 12-fach, bevorzugt 42-fach vergrößert werden.

4. Verwendung einer manuell tragbaren Prüfvorrichtung (1) zum Prüfen der Qualität von Schnittkanten nach der mechanischen Bearbeitung eines Bogens (3) in einer Schneidvorrichtung, vorzugsweise eines Papier-, Karton-, Papp-, Kunststoff- oder Textilbogens, wobei die Prüfvorrichtung (1) eine Kameraeinrichtung (7) mit wenigstens einem Bildsensor, eine Anzeigeeinrichtung (12) und eine Auswertungseinrichtung (13) aufweist, wobei die Prüfvorrichtung (1) manuell relativ zu einem Bogen positioniert wird, wobei mit der Kameraeinrichtung (7) wenigstens ein Bearbeitungsabschnitt (10) des Bogens (3) bildgebend erfasst wird und Bilddaten des Bearbeitungsabschnitts (10) erzeugt werden und wobei mit der Auswertungseinrichtung (13) aus den erzeugten Bilddaten wenigstens ein Qualitätsparameter (14) eines Bearbeitungsergebnisses des Bogens (3) ermittelt und, vorzugsweise, auf der Anzeigeeinrichtung (12) angezeigt wird, wobei die Topographie einer Schnittkante des Bogens (3) über eine bestimmte Kantenlänge aus den von dem Bearbeitungsabschnitt (10) erzeugten Bilddaten bestimmt wird.

5. Verwendung nach Anspruch 4, wobei die Prüfvorrichtung (1) als Smartphone, Personal Digital Assistant (PDA) oder Tablet-Computer ausgebildet ist.

## Claims

1. Method for testing the quality of cut edges after mechanical processing of a sheet (3) in a cutting device, preferably a paper, cardboard, paperboard, plastic or textile sheet, with a manually portable testing device (1), preferably a smartphone, a personal digital assistant (PDA) or a tablet computer, wherein the testing device (1) has a camera device (7) with at least one image sensor, a display device (12) and an evaluation device (13), wherein the testing device (1) is positioned manually relative to a sheet, wherein at least one processing section (10) of the sheet (3) is captured in an imaging manner with the camera device (7) and image data of the processing section (10) are generated and wherein at least one quality parameter (14) of a processing result of the sheet (3) is determined from the generated image data with the evaluation device (13) and, preferably, displayed on the display device (12), wherein the topography of a cut edge of the sheet (3) is determined over a specific edge length from the image data generated by the processing section (10).

2. Method according to claim 1, **characterised in that** the quality parameter (14) is automatically displayed together with the image data of the processing section (10) in a common image representation on the display device (12).

3. Method according to one of the preceding claims, **characterized in that** the image data of the processing section (10) are automatically generated at an at least 4-fold, advantageously at an at least 12-fold, preferably at a 42-fold magnification of the processing section (10) and/or **in that** the image data are automatically magnified by the evaluation device (13) at least 4-fold, advantageously at least 12-fold, preferably 42-fold.

4. Use of a manually portable testing device (1) for testing the quality of cut edges after mechanical processing of a sheet (3) in a cutting device, preferably a paper, cardboard, paperboard, plastic or textile sheet, wherein the testing device (1) has a camera device (7) with at least one image sensor, a display device (12) and an evaluation device (13), wherein the testing device (1) is positioned manually relative to a sheet, wherein at least one processing section (10) of the sheet (3) is captured in an imaging manner with the camera device (7) and image data of the processing section (10) are generated and wherein at least one quality parameter (14) of a processing result of the sheet (3) is determined from the generated image data with the evaluation device (13) and, preferably, displayed on the display device (12), wherein the topography of a cut edge of the sheet (3) is determined over a specific edge length from the image data generated by the processing section (10).

5. Use according to claim 4, wherein the testing device (1) is designed as a smartphone, personal digital assistant (PDA) or tablet computer.

## Revendications

1. Procédé de contrôle de la qualité d'arêtes de coupe après le traitement mécanique d'une feuille (3) dans un dispositif de coupe, de préférence une feuille de papier, de carton, de carton-pâte, de plastique ou de textile, avec un dispositif de contrôle (1) portable manuellement, de préférence un smartphone, un assistant numérique personnel (PDA) ou une tablette, le dispositif de contrôle (1) présentant un dispositif de caméra (7) avec au moins un capteur d'image, un dispositif d'affichage (12) et un dispositif d'évaluation (13), le dispositif de contrôle (1) étant positionné manuellement par rapport à une feuille, au moins une section de traitement (10) de la feuille (3) étant saisie par imagerie avec le dispositif de caméra (7) et des données d'image de la section de traitement (10) étant générées et au moins un paramètre de qualité (14) d'un résultat de traitement de la feuille (3) étant déterminé à partir des données d'image générées avec le dispositif d'évaluation (13) et, de préférence, affiché sur le dispositif d'affichage (12), la topographie d'une arête de coupe de la feuille (3) étant déterminée sur une longueur de bord déterminée à partir des données d'image générées par la section de traitement (10).

2. Procédé selon la revendication 1, **caractérisé en ce que** le paramètre de qualité (14) est affiché automatiquement avec les données d'image de la section de traitement (10) dans une représentation d'image commune sur le dispositif d'affichage (12).

3. Procédé selon l'une des revendications précédentes, **caractérisé en ce que** les données d'image de la section de traitement (10) sont générées automatiquement avec un agrandissement d'au moins 4 fois, avantageusement d'au moins 12 fois, de préférence de 42 fois de la section de traitement (10) et/ou **en ce que** les données d'image sont agrandies automatiquement d'au moins 4 fois, avantageusement d'au moins 12 fois, de préférence de 42 fois par le dispositif d'évaluation (13).

4. Utilisation d'un dispositif de contrôle (1) portable manuellement pour contrôler la qualité des arêtes de coupe après le traitement mécanique d'une feuille (3) dans un dispositif de coupe, de préférence d'une feuille de papier, de carton, de carton-pâte, de plastique ou de textile, le dispositif de contrôle (1) présentant un dispositif de caméra (7) avec au moins un capteur d'image, un dispositif d'affichage (12) et un dispositif d'évaluation (13), le dispositif de contrôle (1) étant positionné manuellement par rapport à une feuille, au moins une section de traitement (10) de la feuille (3) étant saisie par imagerie avec le dispositif de caméra (7) et des données d'image de la section de traitement (10) étant générées et au moins un paramètre de qualité (14) d'un résultat de traitement de la feuille (3) étant déterminé à partir des données d'image générées avec le dispositif d'évaluation (13) et, de préférence, affiché sur le dispositif d'affichage (12), la topographie d'une arête de coupe de la feuille (3) étant déterminée sur une longueur de bord déterminée à partir des données d'image générées par la section de traitement (10).

5. Utilisation selon la revendication 4, dans laquelle le dispositif de contrôle (1) est conçu comme un smartphone, un assistant numérique personnel (PDA) ou un ordinateur tablette.
